# FASCICULE DE BREVET EUROPEEN

(11) **EP 1 678 966 B1**
(45) Date de publication et mention de la délivrance du brevet: **18.06.2008**
(21) Numéro de dépôt: 04790310.9
(22) Date de dépôt: 12.10.2004
(51) Int. Cl.: H04Q 7/30

(54) **Enregistrement d'un terminal auprès d'un système cellulaire de radiocommunication comprenant un groupe de réseaux coeurs**
Registrierung eines Endgerätes in einem Funkkommunikationssystem mit mehreren Kernnetzen
Registration of a terminal in a cellular radiocommunication system comprising a group of core networks

(30) Priorité: 22.10.2003 FR 0312335
(43) Date de publication de la demande: 12.07.2006
(73) Titulaire: Nortel Networks Limited, St Laurent, Québec H4S 2A9 (CA)
(72) Inventeur: FAUCONNIER, Denis, F-78470 Saint Rémy Les Chevreuse (FR); MOUSSET, Claire, F-75006 Paris (FR); CHINIWALA, Sima Nayankumar, Dallas TX-75252 (US)
(74) Mandataire: Loisel, Bertrand
(86) Numéro de dépôt international: PCT/EP2004/011421
(87) Numéro de publication internationale: WO 2005/039213

(56) Documents cités:
- EP-A- 1 263 247
- WO-A-03/037021
- TSG SERVICES AND SYSTEM ASPECTS: "Intra-domain connection of Radio Access Network (RAN) nodes to multiple Core Network (CN) nodes (Release 5)" 3GPP TS 23.236 V5.2.0 (2002-03), [Online] mars 2002 (2002-03), pages 1-35, XP002283653 Extrait de l'Internet: URL:http://www.3gpp.org/ftp/Specs/html-inf o/23236.htm> [extrait le 2004-06-07] cité dans la demande

## Description

La présente invention concerne les systèmes cellulaires de radiocommunication avec les mobiles. Elle s'applique aux systèmes cellulaires dont l'architecture se décompose en réseaux coeurs et en réseaux d'accès radio.

Dans les systèmes de seconde génération, de type GSM ou dérivé, le réseau coeur est appelé sous-système de commutation de réseau (NSS, "Network Switching Subsystem"), et le réseau d'accès radio est appelé sous-système de stations de base (BSS, "Base Station Subsystem"). La terminologie "réseau coeur" (CN, "Core Network") et "réseau d'accès radio" (RAN, "Radio Access Network") est celle employée dans les systèmes de troisième génération tels que l'UMTS, mais elle correspond essentiellement aux mêmes notions. Ces systèmes supportent des communications en mode circuit (domaine CS, "Circuit Switched") et des communications en mode paquets (domaine PS, "Packet Switched"). Dans les systèmes GSM, le service du domaine PS est appelé GPRS ("General Packet Radio Service").

Dans les spécifications du réseau UMTS, on fait référence à un découpage en strates permettant de séparer des niveaux de service indépendants. La strate AS ("Access Stratum") gère les fonctions liées au réseau d'accès, notamment la gestion des ressources radio, tandis que la strate NAS ("Non Access Stratum") a en charge des fonctions indépendantes du réseau d'accès (gestion d'appels, gestion de la mobilité des terminaux, ...).

Dans les systèmes de troisième génération, le même réseau coeur peut coopérer avec plusieurs réseaux d'accès radio, par exemple le RAN terrestre de l'UMTS (UTRAN, "UMTS Terrestrial RAN"), un réseau de satellites (SRAN), un BSS du GSM, un RAN de type GPRS / EDGE (GERAN), toutes sortes de réseaux d'accès radio à large bande, ...

Le réseau coeur se compose de commutateurs interconnectés appelés MSC ("Mobile Switching Center") pour le domaine CS et GSN ("GPRS Support Node") pour le domaine PS. Les MSC qui servent de passerelles avec d'autres réseaux sont appelés GMSC ("Gateway MSC"). Les GSN interfacés avec un RAN sont appelés SGSN ("Serving GSN"), tandis que ceux qui servent de passerelles avec d'autres réseaux sont appelés GGSN ("Gateway GSN"). L'interface entre un MSC et un contrôleur de station de base d'un BSS GSM est appelée interface A. L'interface entre un SGSN et un BSS GSM pour le transport des données GPRS est appelée interface Gb. L'interface entre un contrôleur de réseau radio (RNC, "Radio Network Controller") de l'UTRAN et un MSC ou un SGSN est appelée interface lu.

Outre les commutateurs, le réseau coeur comporte habituellement des organes intervenant dans la gestion des abonnés: registre de localisation nominal (HLR, "Home Location Register"), centre d'authentification (AuC, . "Authentication Center"), etc.

La configuration du système à laquelle on s'intéresse dans le cadre de la présente invention est une configuration où un RAN est partagé par plusieurs CN différents. Dans la suite de la présente description, on considèrera plus particulièrement le cas où ce réseau d'accès radio est de type UTRAN, sans que ceci limite la généralité du propos.

Ces systèmes à réseau partagé sont décrits dans les rapports techniques 3GPP TR 22.951, version 6.1.0 et 3GPP TR 23.851, version 1.0.0 publiés respectivement en mars et en septembre 2003 par l'organisation 3GPP ("3^{rd} Generation Partnership Project").

Les architectures à partage de réseau permettent à différents opérateurs de réseaux coeurs de se connecter à un même RAN dont ils partagent les éléments ainsi que les ressources spectrales. Ces opérateurs peuvent détenir par ailleurs des RAN qui leur sont propres. Certains d'entre eux peuvent être simplement opérateurs de réseau coeur sans bénéficier d'une licence sur le spectre radio.

L'architecture plus particulièrement envisagée ici est celle dite MOCN ("Multi-Operator Core Network"), dans laquelle plusieurs réseaux coeurs gérés par des opérateurs différents sont connectés au même réseau d'accès radio. L'opérateur du RAN peut ou non être l'un des opérateurs de CN.

De tels schémas de partage de réseau sont prévus dans les systèmes de troisième génération de la "release 6". Les terminaux radio "release 6" peuvent ainsi sélectionner l'opérateur de CN devant traiter leurs appels.

Cependant, lorsque des équipements "release 6" seront déployés, il existera un important parc de terminaux en circulation qui ne seront pas munis des fonctions de la "release 6" et qui devront néanmoins être en mesure de bénéficier du système et en particulier des particularités liées au partage de réseau.

Pour être en mesure de communiquer, un terminal mobile s'enregistre auprès d'un réseau coeur dans une procédure d'attachement ou de mise à jour de localisation. Cet enregistrement permet ensuite de rechercher le terminal pour l'avertir d'appels entrants. Il permet aussi de servir les requêtes de communication issues du terminal.

Dans le contexte MOCN, cet enregistrement ne pose pas de problème pour un terminal "release 6", qui est capable de sélectionner d'emblée le CN auprès duquel il souhaite s'enregistrer. Les CN disponibles sont identifiés dans les informations système diffusées par le RAN partagé, ce qui permet au terminal de les identifier et d'effectuer la sélection de celui qui lui convient.

Pour un terminal "pré-release 6", cette sélection n'est pas possible de sorte que la requête d'enregistrement est orientée par le RAN partagé vers un CN susceptible de ne pas convenir. Une forme de reroutage est donc requise pour chercher à enregistrer un tel terminal auprès d'un autre CN.

Le rapport technique 3GPP TR 23.851 précité suggère que si le CN sélectionné n'est pas capable de desservir le terminal, ce CN indique au RAN que la requête d'enregistrement est à transmettre à un autre CN, le RAN se chargeant alors de la rerouter.

Cette solution présente des Inconvénients. En premier lieu, elle requiert des développements spécifiques dans les RNC, ce qui rend Impossible d'offrir la fonctionnalité voulue avec des RNC Installés qui ne seraient pas conformes à la "release 6". Elle requiert aussi le support d'une signalisation spécifique sur l'interface lu pour offrir cette fonction de reroutage. Pour être complet, cette signalisation spécifique doit aussi être ajoutée à celle requise sur les Interfaces A et Gb dans le cas d'un BSS, Il faut également prévoir un mécanisme pour empêcher le RNC de se mettre en boucle en essayant les différents CN de façon répétitive. Le temps mis pour répondre à la requête d'enregistrement du terminal peut devenir excessif et faire expirer les temporisations appliquées par le terminal.

WO 03/037021 présente une méthode pour rerouter l'identité d'un terminal entre des réseaux coeur et un réseau d'accès.

Un but de la présente invention est de proposer un mécanisme souple et efficace pour le reroutage de ces requêtes d'enregistrement.

L'invention propose ainsi un procédé pour enregistrer un terminal radio auprès d'un système cellulaire de radiocommunication comprenant un groupe de réseaux coeurs et un réseau d'accès radio partagé entre les réseaux coeurs du groupe. Selon l'Invention, le procédé comprend les étapes suivantes:
- émettre une requête d'enregistrement du terminal vers le réseau d'accès radio partagé et relayer ladite requête vers un premier réseau coeur du groupe;
- si le premier réseau coeur ne convient pas pour l'enregistrement du terminal, émettre depuis le premier réseau coeur vers le terminal un message d'acceptation de la requête par l'intermédiaire du réseau d'accès radio partagé puis un message de recherche du terminal, le message d'acceptation portant une Indication de ressources de réseau propres à un second réseau coeur du groupe; et
- indiquer lesdites ressources de réseau dans la réponse audit message de recherche émise depuis le terminal, le réseau d'accès radio partagé examinant les ressources de réseau indiquées pour router ladite réponse vers le second réseau coeur.

Les mécanismes dits "luFlex" permettant de spécifier les ressources de réseau coeur à employer pour l'acheminement ultérieur des messages provenant des terminaux ont été prévus pour permettre le partage de charge entre différents noeuds d'un réseau coeur. Ces mécanismes peuvent être étendus au cas où Il y a plusieurs réseaux coeurs.

Le premier réseau coeur sollicité accepte la requête d'enregistrement du terminal en indiquant des ressources de réseau d'un autre réseau coeur. Les messages ultérieurs provenant du terminal seront alors routés automatiquement vers cet autre réseau coeur si celui-ci est en mesure de procéder à l'enregistrement.

Un second aspect de la présente invention se rapporte à un commutateur de réseau coeur pour un système cellulaire de radiocommunication comprenant un groupe de réseaux coeurs et un réseau d'accès radio partagé entre les réseaux coeurs du groupe, le commutateur comprenant: des moyens d'interface avec le réseau d'accès radio partagé; des moyens de traitement d'une tentative d'enregistrement d'un terminal radio auprès du réseau coeur du groupe dont fait partie ledit commutateur; des moyens pour, en cas d'échec de la tentative d'enregistrement, envoyer vers le terminal, par l'intermédiaire du réseau d'accès radio partagé, un message d'acceptation de requête d'enregistrement portant une Indication de ressources de réseau propres à un autre réseau coeur du groupe; et des moyens pour faire suivre le message d'acceptation de requête d'enregistrement portant l'indication de ressources de réseau propres à l'autre réseau coeur par un message de recherche du terminal.

D'autres particularités et avantages de la présente invention apparaîtront dans la description ci-après d'exemples de réalisation non limitatifs, en référence aux dessins annexés, dans lesquels:
- la figure 1 est un schéma montrant un système cellulaire adapté à la mise en oeuvre de l'Invention;
- les figures 2 et 3 sont des diagrammes montrant des échanges de signalisation Intervenant respectivement dans deux modes de réalisation de l'invention.

L'invention est décrite ci-après dans son application à un système de troisième génération de type UMTS, dans le cas particulier de communications en mode circuit (domaine CS). On remarquera que les caractéristiques de l'Invention décrites ci-après se transposent aisément au domaine PS ou encore à d'autres types de systèmes cellulaires.

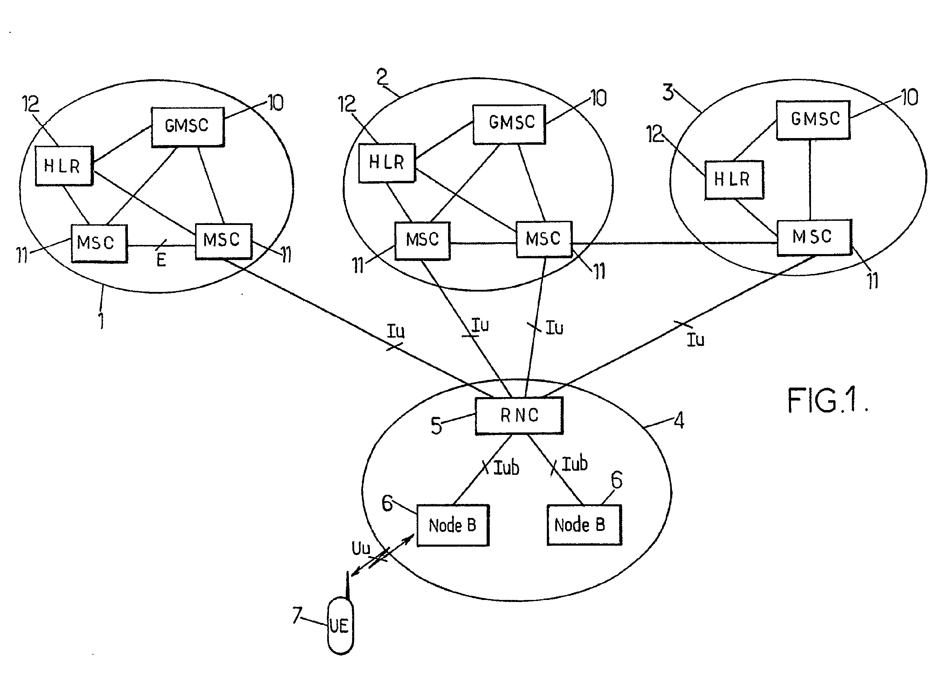

Le système cellulaire représenté sur la figure 1 comporte trois réseaux coeurs 1, 2, 3 qui partagent les ressources d'un réseau d'accès radio 4.

Pour en faciliter la lecture, le dessin montre une représentation simplifiée du réseau d'accès radio 4 de type UTRAN, avec un contrôleur de réseau radio (RNC) 5 supervisant deux stations de base (ou "nodes B") 6 à travers une Interface dite lub. Ces nodes B 6 offrent une interface radio Uu avec les terminaux mobiles 7 qui, dans le Jargon de l'UMTS, sont appelés UE ("User Equipment"), En pratique, un RAN 4 comporte généralement des RNC et des nodes B beaucoup plus nombreux.

Chaque réseau coeur 1, 2, 3 comporte des commutateurs de type MSC pour le mode circuit, dont des GMSC 10 pour servir de passerelle avec des réseaux externes tels que par exemple le réseau téléphonique commuté, Les autres MSC 11 sont reliés à un ou plusieurs RAN afin de desservir des terminaux mobiles. Dans l'exemple représenté, le RNC 5 du réseau d'accès radio est relié à un MSC du CN 1, à deux MSC du CN 2 et à un MSC du CN 3 à travers des Interfaces lu. La connexion du RNC 5 à plusieurs MSC 11 d'un même réseau coeur (le CN 2 sur la figure 1) peut être réalisée suivant les mécanismes "luFlex" décrits dans la spécification technique 3GPP TS 23.236, version 5.2.0, publiée en mars 2002 par le 3GPP.

Chaque réseau coeur 1, 2, 3 comporte en outre un registre d'abonnés 12 de type HLR permettant à l'opérateur du réseau coeur d'assurer la gestion de ses abonnés et de savoir les localiser dans le système cellulaire. Pour faire communiquer entre eux les commutateurs 10, 11, les HLR 12 et les autres organes du réseau coeur, celui-ci a, de façon classique, une Infrastructure basée sur le protocole IP ("Internet Protocol"),

Dans le cas de CN partageant un même RAN, les Infrastructures IP sur lesquelles sont construits ces CN sont prévues pour communiquer entre elles afin que les commutateurs puissent échanger certaines informations utiles au partage. L'interface entre deux MSC, appelée Interface E dans la norme, peut ainsi être étendue à travers l'infrastructure IP à des MSC n'appartenant pas au même CN.

Les protocoles servant à la gestion des abonnés dans les réseaux coeurs, à savoir le protocole MAP ("Mobile Application Part") entre les différents noeuds du réseau coeur, et MM ("Mobility Management") entre les terminaux et les MSC pour le domaine CS, sont décrits dans la spécification technique 3GPP TS 24.008, version 5.9.0, publiée en septembre 2003 par le 3GPP.

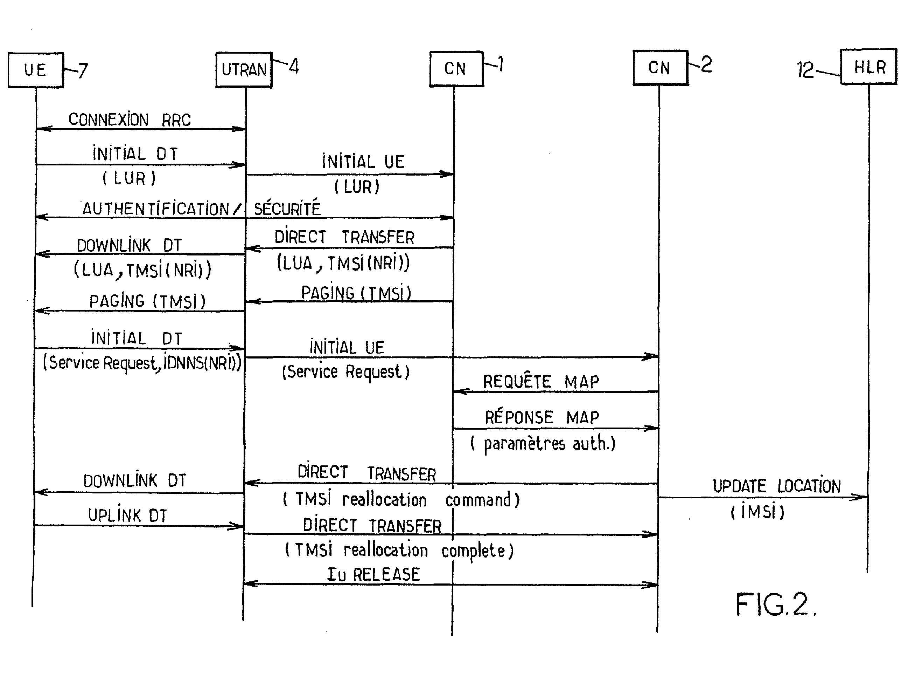

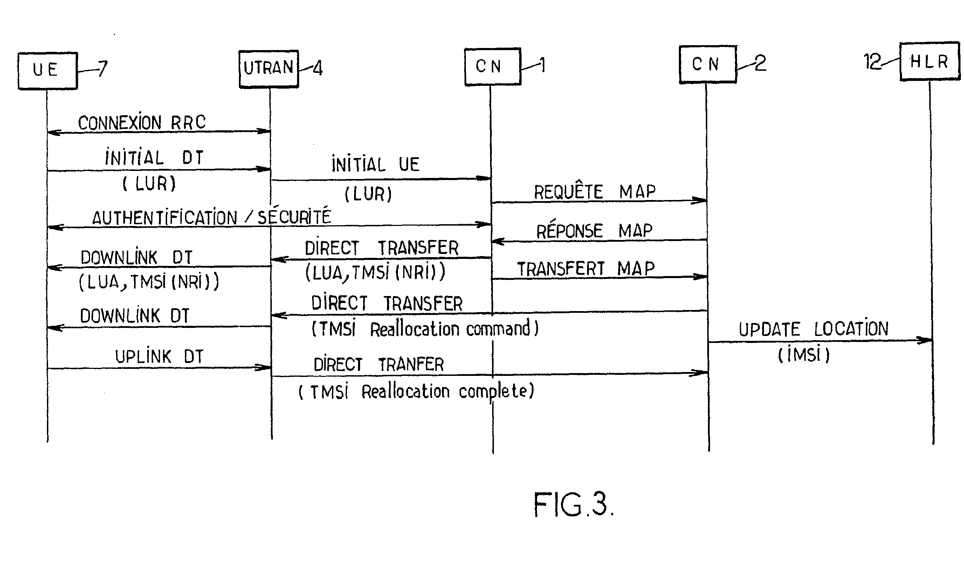

Entre le terminal 7 et le RNC 5, les Informations NAS du protocole MM sont transportées dans des messages du protocole RRC ("Radio Ressource Control") décrit dans la norme ETSI TS 125.331, version 5.6.0, publiée en septembre 2003. Sur l'interface lu, les Informations NAS du protocole MM sont transportées dans des messages du protocole RANAP ("RAN Application Part") décrit dans la norme ETSI TS 125.413, version 5.6.0, publiée en septembre 2003. Dans les diagrammes des figures 2 et 3, le transfert des Informations NAS du protocole MM est représenté en montrant les messages ARC ou RANAP dans lesquels ces informations sont encapsulées.

L'enregistrement d'un UE auprès d'un CN est initialisé par l'UE, dans l'un des cas suivants:
- l'UE est mis sous tension et déclenche une procédure dite "IMSI attach" pour se signaler au système;
- l'UE en mode veille détecte qu'il a changé de zone de localisation, et déclenche une procédure de mise à Jour de localisation pour le faire savoir au système afin que celui-ci puisse le localiser plus efficacement si un appel entrant survient.

Dans les deux cas, l'UE 7 commence par établir une connexion RRC avec le RAN 4 dont Il détecte les signaux de balise, puis II émet un message MM de requête de mise à jour de localisation (LUR, "Location Updating Request", 3GPP TS 24.008, v5.9.0, § 4.4.4.1). Cette requête LUR est Incluse dans le champ "NAS Message" d'un message INITIAL DIRECT TRANSFER du protocole RRC (ETSI TS 125.331, v5.6.0, § 10.2.16c). Si l'UE est conforme à la "release 6", Il spécifie dans ce message RRC le CN auprès duquel il y a lieu de l'inscrire, et le RNC route la requête LUR en conséquence.

Ce routage direct ne peut cependant pas s'appliquer à un UE de type antérieur à la "release 6", pour lequel on pourra avoir recours à l'un des mécanismes de reroutage illustrés par les figures 2 et 3. Les opérations Incombant aux réseaux coeurs sur ces figures sont exécutées par des programmes Installés dans les commutateurs, à savoir les MSC raccordés au RAN partagé. Dans certains cas, ces programmes peuvent être en partie décentralisés vers d'autres organes du réseau coeur.

Le message MM de requête de mise à Jour de localisation est d'abord routé par l'UTRAN 4 vers un CN arbitraire, à savoir le CN 1 dans l'exemple considéré sur les figures 2 et 3, en étant inclus dans le champ "NAS-PDU " d'un message INITIAL UE du protocole RANAP (ETSI TS 125.413, v5.6.0, § 9.1.33). Le MSC recevant la requête examine si le CN 1 convient pour procéder à l'enregistrement du terminal, sur la base de l'identlté fixe Internationale (IMSI, "International Mobile Subscriber Identity") ou temporaire (TMSI, "Temporary Mobile Subscriber identity") Indiquée par le terminal mobile dans sa requête. Si c'est le cas, la mise à Jour sera poursuivie selon le mécanisme standard. Sinon, une forme de reroutage de la signalisation concernant le terminal sera requise vers un autre réseau coeur susceptible de convenir pour cet enregistrement (le CN 2 dans l'exemple des figures 2 et 3).

Dans la réalisation Illustrée par la figure 2, le CN 1 recevant la requête commence par dialoguer avec l'UE 7 à travers l'UTRAN 4 pour exécuter la procédure standard d'authentification du terminal et de déclenchement du mode de sécurité, afin que les transmissions ultérieures entre le ou les CN et l'UE soient chiffrées conformément à des paramètres dérivés lors de l'authentification.

Ayant déterminé qu'il n'est pas en mesure d'enregistrer l'UE, le CN 1 va néanmoins retourner au terminal un message LUA ("Location Updating Accept", 3GPP TS 24.008, v5,9.0, § 4.4.4.6) d'acceptation de sa mise à jour de localisation. Ce message Indique à l'UE l'Identité temporaire TMSI que le CN 1 vient de lui allouer. L'UTRAN le relale à l'UE dans un message DOWNLINK DIRECT TRANSFER du protocole RRC (ETSI TS 125.331, v5.6.0, § 10.2.11). Conformément aux mécanismes luFlex, le TMSI a un champ NRI ("Network Resource Identifier", 3GPP TS 23.236, v5.2.0, § 4.3) qui Indique à l'UE des ressources de réseau à fournir pour le routage ultérieur des unités de données qu'il émettra.

Suivant l'invention, ce champ NRI du TMSI alloué et transmis par le CN 1 désigne des ressources du CN 2 vers lequel Il y a lieu de rerouter la signalisation.

Si seulement deux CN 1 et 2 partagent l'UTRAN 4, le CN 1 peut systématiquement indiquer des ressources de l'autre CN 2 en cas d'échec de la tentative d'enregistrement, et vice-versa. Il se peut aussi que chaque CN partageant un RAN avec d'autres CN connaisse les règles d'attribution des identités IMSI et/ou TMSI dont l'enregistrement est possible dans les autres CN, et soit ainsi capable de déterminer avec certitude lequel des autres CN conviendra pour procéder à l'enregistrement de l'UE. Dans ce cas, le CN 1 détermine le CN pertinent en parallèle à l'authentification de l'UE pour être en mesure de renseigner en conséquence le champ NRI du message LUA retourné à l'UE. Si plus de deux CN partagent le même RAN et si ces règles d'attribution ne sont pas connues, le CN 1 peut sélectionner un CN 2, soit arbitrairement soit après avoir interrogé les autres CN selon une méthode telle que celle décrite plus loin en référence à la figure 3, puis renseigner en conséquence le NRI inclus dans le TMSI Indiqué avec le message LUA.

Dans l'exemple de la figure 2, le CN 1 qui ne peut pas procéder à l'enregistrement fait suivre le message LUA par un message RANAP de recherche ("Paglng", ETSI TS 125.413, v5.6.0, § 9.1.23) du terminal identifié par son TMSI, que le RAN diffuse dans la zone de localisation du terminal dans un message RRC correspondant (ETSI TS 125.331, v5.6.0, § 10.2.20). Le terminal y répond par un message de requête de service ("Service Request") Inclus dans le champ "NAS Message" d'un nouveau message RRC INITIAL DIRECT TRANSFER. Ce message RRC comporte en outre un champ IDNNS ("Intra-Domain NAS Node Selector") qui, conformément au mécanisme luFlex, contient le NRI qui a été fourni précédemment à l'UE. L'UTRAN examine ce champ IDNNS pour router la réponse de l'UE vers un MSC du CN 2 dont les ressources ont été indiquées, à l'Intérieur d'un message RANAP INITIAL UE. Ceci réalise le reroutage souhaité.

Le CN 2 reçoit alors une requête de service concernant un TMSi qui lui est Inconnu. Le MSC est programmé pour Interpréter cela dans le présent contexte d'une requête d'enregistrement qui n'a pas abouti auprès un autre CN 1 partageant le RAN 4. Le CN 2 diffuse alors vers les autres CN (MSC) partageant le RAN 4 un message de requête spécialement ajouté au protocole MAP pour demander à ces autres CN s'ils ont reçu une requête de l'UE en question, Identifié par son TMSI, et dans l'affirmative de lui retourner les paramètres d'identification (IMSI) et d'authentification qui lui permettront de poursuivre le dialogue avec cet UE. Ces paramètres sont retournés par le CN qui a commandé le reroutage (le CN 1 dans notre exemple) dans un message de réponse spécialement ajouté au protocole MAP. Le CN 2 réalloue alors à l'UE un nouveau TMSI au moyen de la procédure de réallocatlon décrite dans la spécification 3GPP TS 24,008, v5.9,0 (§ 4.3.1).

Ayant récupéré l'IMSI du terminal, le CN 2 peut vérifier s'il convient pour l'enregistrement de ce terminal. Dans l'affirmative, il effectue la mise à jour de la localisation du terminal ainsi identifié auprès de son HLR 12, qui peut appartenir au même CN ou à un autre (voir norme ETSI TS 23.012, version 5.2,0, publiée en septembre 2003, § 4.1). L'enregistrement se termine par une libération de l'interface lu, commandée par le CN 2 en ce qui concerne l'UE (procédure RANAP "lu Release", ETSI TS 125.413, v5.6.0, § 8.5), afin de mettre un terme à la séquence de signalisation qui a été Initiée par le paging de l'UE.

Si le CN 2 n'est pas non plus en mesure d'enregistrer l'UE, il n'effectue pas la mise à jour de localisation auprès du HLR 12. Il peut éventuellement procéder comme le CN 1 l'a fait auparavant, en réallouant le TMSI avec un champ NRI pointant vers un troisième CN du groupe partageant le RAN 4 puis en renvoyant à l'UE un message de paging pour provoquer le même genre de réponse de l'UE. Le troisième CN adoptera alors le même comportement que celui qui vient d'être décrit pour le CN 2.

La figure 3 illustre une variante de réalisation dans laquelle le CN 1, qui reçoit initialement la requête d'enregistrement de l'UE et qui ne convient pas pour effectuer cet enregistrement, n'adresse pas de message de paging à l'UE.

Selon cette variante, à réception de la requête LUR et après (ou en parallèle avec) l'exécution de la procédure standard d'authentification du terminal et de déclenchement du mode de sécurité, le CN 1 interroge le ou les autres CN partageant le RAN 4 dans un message de requête spécialement ajouté au protocole MAP et incorporant le message LUR reçu du terminal mobile. Chaque CN recevant cette requête répond au CN 1 en précisant s'il convient pour l'enregistrement de l'UE, dans un message de réponse spécialement ajouté au protocole MAP.

Le CN 1 peut alors sélectionner le CN approprié (le CN 2 dans notre exemple) et allouer à l'UE une nouvelle Identité temporaire TMSI avec un NRI propre au CN sélectionné. Le TMSI alloué est signalé au terminal avec le message LUA d'acceptation de sa requête d'enregistrement. Parallèlement, le CN 1 transfère au CN sélectionné les paramètres qu'il a obtenus dans la procédure d'authentification. A réception de ces paramètres, le CN 2 réalloue à l'UE un nouveau TMSI comme décrit précédemment et procède à la mise à jour de la localisation du terminal auprès de son HLR. L'UE peut ensuite solliciter le réseau coeur 2 via l'UTRAN s'il souhaite faire une requête de service.

La norme permet à l'UE de présenter une requête supplémentaire en même temps que sa requête de mise à jour de localisation (indication optionnelle de "follow-on" dans le message LUR). Si c'est ainsi que l'UE a Initialement présenté son message LUR, le CN 1 rejette la requête supplémentaire et en informe l'UE dans le message LUA qui lui est retourné (indication "follow-on reject"). Ceci amène l'UE à présenter à nouveau sa requête au CN 2 approprié, avant ou après réallocation du TMSI.

L'invention a été décrite ci-dessus dans son application au domaine CS. Naturellement, les mêmes procédures sont transposables au domaine PS, seuls les noms des messages étant différents. Il est préférable que les MSC et les SGSN des différents réseaux coeurs partageant le même réseau d'accès appliquent les mêmes règles de reroutage afin qu'un même UE soit traité par le même CN pour ses communications en mode circuit et en mode paquets.

Les différents modes de réalisation de l'invention qui ont été décrits a pour avantage que le reroutage des requêtes d'enregistrement des UE "pré-release 6" dans un contexte MOCN ne requiert d'adaptation particulière ni au niveau du réseau d'accès ni au niveau de l'UE, le procédé n'ayant pas d'impact sur la strate AS. En conséquence, Il suffit, sur les interfaces lu, lub et Uu de faire appel à des messages existant dans les protocoles MM, RANAP et RRC. Le procédé minimise donc les contraintes en dehors du réseau coeur.

Dans le réseau coeur. Il suffit d'adapter le comportement des MSC en présence de requêtes de mise à Jour de localisation qu'ils ne sont pas capables de traiter directement, et d'enrichir le protocole MAP de façon correspondante, un tel enrichissement étant de toute façon nécessaire pour assurer la fonctionnalité MOCN, notamment pour le transfert des paramètres d'authentification.

En outre, comme l'UE reçoit relativement rapidement une réponse à sa requête LUR, on minimise le risque que la temporisation qu'il déclenche à l'émission de cette requête vienne à expiration.

## Revendications

1. Procédé pour enregistrer un terminal radio (7) auprès d'un système cellulaire de radiocommunication comprenant un groupe de réseaux coeurs (1-3) et un réseau d'accès radio (4) partagé entre les réseaux coeurs du groupe, le procédé comprenant les étapes suivantes:
- émettre une requête d'enregistrement du terminal vers le réseau d'accès radio partagé et relayer ladite requête vers un premier réseau coeur (1) du groupe;
- si le premier réseau coeur ne convient pas pour l'enregistrement du terminal, émettre depuis le premier réseau coeur (1) vers le terminal (7) un message d'acceptation de la requête par l'intermédiaire du réseau d'accès radio partagé puis un message de recherche du terminal, le message d'acceptation portant une Indication de ressources de réseau propres à un second réseau coeur (2) du groupe; et
- Indiquer lesdites ressources de réseau dans ia réponse audit message de recherche émise depuis le terminal (7), le réseau d'accès radio partagé examinant les ressources de réseau indiquées pour router ladite réponse vers le second réseau coeur.

2. Procédé selon la revendication 1, comprenant en outre, lorsque le premier réseau coeur ne convient pas pour l'enregistrement du terminal (7), une étape de transmission du premier réseau coeur (1) au second réseau coeur (2) de paramètres d'authentification du terminal.

3. Procédé selon la revendication 2, dans lequel les paramètres d'authentification du terminal sont obtenus dans une procédure d'authentification exécutée en réponse à la réception de la requête d'enregistrement du terminal par le premier réseau coeur (1) avant de retourner le message d'acceptation de la requête.

4. Procédé selon la revendication l'une quelconque des revendications précédentes, dans lequel, à réception de la réponse du terminal (7) au message de recherche, le second réseau coeur (2) obtient des paramètres d'identification et d'authentification du terminal depuis le premier réseau coeur (1), puis réalloue une identité temporaire au terminal s'il convient pour l'enregistrement du terminal.

5. Procédé selon la revendication 4, dans lequel, si le second réseau coeur (2) ne convient pas pour l'enregistrement du terminal (7). Il retourne au terminal un message d'acceptation de la requête par l'intermédiaire du réseau d'accès radio partagé, ce message d'acceptation portant une Indication de ressources de réseau propres à un troisième réseau coeur du groupe.

6. Procédé selon l'une quelconque des revendications 1 à 3, dans lequel la requête d'enregistrement du terminal est transmise par le premier réseau coeur (1) au second réseau coeur (2), et dans lequel, si le second réseau coeur convient pour l'enregistrement du terminal (7), Il répond au premier réseau coeur en Indiquant qu'il peut accepter l'enregistrement du terminal, le message d'acceptation de la requête étant ensuite retourné au terminal par le premier réseau coeur avec l'Indication des ressources de réseau propres au second réseau coeur.

7. Procédé selon la revendication 6, dans lequel la requête d'enregistrement du terminal est diffusée par le premier réseau coeur (1) vers plusieurs autres réseaux coeurs du groupe, et dans lequel le premier réseau coeur traite les réponses reçues des réseaux coeurs du groupe pour sélectionner le second réseau coeur (2).

8. Procédé selon la revendication 6 ou 7, dans lequel le premier réseau coeur (1) adresse au second réseau coeur (2) des paramètres d'identification et d'authentification du terminal (7), et le second réseau coeur réalloue une identité temporaire au terminal et procède à une mise à Jour de localisation du terminal auprès d'un registre de localisation (12).

9. Procédé selon l'une quelconque des revendications 6 à 8, dans lequel, lorsque la requête d'enregistrement est accompagnée par une requête supplémentaire issue du terminal (7) et que le premier réseau coeur (1) ne convient pas pour l'enregistrement du terminal, le message d'acceptation retourné au terminal spécifie un rejet de ladite requête supplémentaire.

10. Commutateur de réseau coeur pour un système cellulaire de radiocommunication comprenant un groupe de réseaux coeurs (1-3) et un réseau d'accès radio (4) partagé entre les réseaux coeurs du groupe, le commutateur comprenant :
- des moyens d'interface avec le réseau d'accès radio partagé,
- des moyens de traitement d'une tentative d'enregistrement d'un terminal radio (7) auprès du réseau coeur (1) du groupe dont fait partie ledit commutateur,
- des moyens pour, en cas d'échec de la tentative d'enregistrement, envoyer vers le terminal, par l'intermédiaire du réseau d'accès radio partagé, un message d'acceptation de requête d'enregistrement portant une Indication de ressources de réseau propres à un autre réseau coeur du groupe, et
- des moyens pour faire suivre le message d'acceptation de requête d'enregistrement portant l'indication de ressources de réseau propres à l'autre réseau coeur (2) par un message de recherche du terminal.

11. Commutateur selon la revendication 10, comprenant art outre des moyens pour, en cas d'échec de la tentative d'enregistrement, transmettre audit autre réseau coeur (2) des paramètres d'authentification du terminal (7).

12. Commutateur selon la revendication 11, comprenant des moyens d'authentification du terminal pour obtenir lesdits paramètres d'authentification du terminal en réponse à la réception d'une requête d'enregistrement du terminal avant de retourner le message d'acceptation de la requête.

13. Commutateur selon l'une quelconque des revendications 10 à 12, comprenant des moyens pour transmettre une requête d'enregistrement du terminal (7) audit autre réseau coeur (2), et des moyens de réception d'une réponse dudit autre réseau coeur Indiquant si celui-ci convient pour l'enregistrement du terminal, ladite réponse étant traitée pour produire le message d'acceptation de requête d'enregistrement portant l'indication des ressources de réseau propres à l'autre réseau coeur.

14. Commutateur selon la revendication 13, dans lequel les moyens pour transmettre la requête d'enregistrement à l'autre réseau coeur (2) comprennent des moyens pour diffuser ladite requête vers plusieurs réseaux coeurs du groupe, le commutateur comprenant des moyens de traitement des réponses reçues des réseaux coeurs du groupe pour sélectionner ledit autre réseau coeur.

15. Commutateur selon la revendication 13 ou 14, comprenant des moyens pour adresser audit autre réseau coeur (2) des paramètres d'identification et d'authentification du terminal (7), pour permettre audit autre réseau coeur de procéder à une mise à jour de localisation du terminal auprès d'un registre de localisation (12) et de réallouer une identité temporaire au terminai.

16. Commutateur selon l'une quelconque des revendications 13 à 15, dans lequel les moyens pour envoyer le message d'acceptation vers le terminal (7) en cas d'échec de la tentative d'enregistrement comprennent des moyens pour rejeter une requête de service accompagnant la requête d'enregistrement Issue du terminal.

## Claims

1. Method for registration of a radio terminal (7) with a cellular radio communication system comprising a group of core networks (1-3) and a radio access network (4) shared between the core networks of the group, the method comprising the following steps:
- transmission of a request for registration of the terminal to the shared radio access network and relaying of said request to a first core network (1) of the group;
- if the first core network is not suitable for registration of the terminal, transmission from the first core network (1) to the terminal (7) of a request acceptance message through the intermediary of the shared radio access network then a terminal, search message, the acceptance message including an indication of network resources belonging to a second core network (2) of the group; and
- indication of said network resources in the reply to said search message transmitted from the terminal (7), the shared radio access network examining the indicated network resources to route said reply to the second core network.

2. Method according to claim 1, comprising in addition, when the first core network is not suitable for registration of the terminal (7), a step for transmission of terminal authentication parameters from the first core network (1) to the second core network (2).

3. Method according to claim 2, in which the terminal authentication parameters are obtained in an authentication procedure carried out in response to the reception of the terminal registration request by the first core network (1) before returning the request acceptance message.

4. Method according to any one of the preceding claims, in which, on reception of the reply from the terminal (7) to the search message, the second core network (2) obtains terminal identification and authentication parameters from the first core network (1), then reassigns a temporary identity to the terminal if it is suitable for registration of the terminal.

5. Method according to claim 4, in which, if the second core network (2) is not suitable for registration of the terminal (7), it returns to the terminal a request acceptance message through the intermediary of the share radio access network, this acceptance message including an indication of network resources be longing to a third core network of the group.

6. Method according to any one of claims 1 to 3, in which the request for registration of the terminal is transmitted by the first core network (1) to the second core network (2), and in which, if the second core network is suitable for registration of the terminal (7), it replies to the first core network by indicating that it can accept registration of the terminal, the request acceptance message then being returned to the terminal by the first core network with the indication of the network resources belonging to the second core network.

7. Method according to claim 6, in which the request for registration of the terminal is sent out by the first core network (1) to a plurality of other core networks of the group, and in which the first core network processes the replies received from the core networks of the group to select the second core network (2).

8. Method according to claim 6 or 7, in which the first core network (1) sends the second core network (2) parameters for identification and authentication of the terminal (7), and the second core network reassigns a temporary identity to the terminal and proceeds to update the location of the terminal with a location register (12).

9. Method according to any one of claims 6 to 8, in which, when the registration request is accompanied by an additional request from the terminal (7) and the first core network (1) is not suitable for registration of the terminal, the acceptance message returned to the terminal specifies rejection of said additional request.

10. Core network switch for a cellular radio communication system comprising a group of core networks (1-3) and a radio access network (4) shared between the core networks of the group, the switch comprising:
- means for interfacing with the shared radio access network,
- means for processing an attempt at registration of a radio terminal (7) with the core network (1) of the group of which said switch forms part,
- in the event of failure of the attempt at registration, means for sending the terminal through the intermediary of the shared radio access network, a message accepting the request for registration including an indication of network resources belonging to another core network of the group, and
- means for following the message accepting the request for registration including the indication of network resources belonging to the other core network (2) with a terminal search message.

11. Switch according to claim 10, additionally comprising means for transmitting parameters for authentication of the terminal (7) to said other core network (2) in the event of failure of the attempt at registration.

12. Switch according to claim 11, comprising means for authentication of the terminal to obtain said terminal authentication parameters in response to the reception of a request for registration of the terminal before returning the request acceptance message.

13. Switch according to any one of claims 10 to 12, comprising means for transmitting a request for registration of the terminal (7) to said other core network (2), and means for reception of a reply from said other core network indicating if the latter is suitable for registration of the terminal, said reply being processed to produce the message for acceptance of the request for registration including the indication of the network resources belonging to the other core network.

14. Switch according to claim 13, in which the means for transmitting the registration request to the other core network (2) comprise means for sending out said request to a plurality of core networks of the group, the switch comprising means for processing the replies received from the core networks of the group to select said other core network.

15. Switch according to claim 13 or 14, comprising means for sending said other core network (2) parameters for identification and authentication of the terminal (7), to enable said other core network to update the location of the terminal in a location register (12) and reassign a temporary identity to the terminal,

16. Switch according to any one of claims 13 to 15, in which the means for sending the acceptance message to the terminal (7) in the event of failure of the attempt at registration comprise means for rejecting a request for service accompanying the request for registration coming from the terminal.

## Patentansprüche

1. Verfahren zum Registrieren eines Funkterminals (7) in einem Mobilfunksystem umfassend eine Gruppe von Kernnetzen (1 - 3) und ein Funkzugangsnetz (4), das auf die Kernnetze der Gruppe verteilt ist, wobei das Verfahren die folgenden Schritte umfasst:
- Senden einer Anfrage zur Registrierung des Terminals an das aufgeteilte Punkzugangsnetz und Übertragen der Anfrage an ein erstes Kernnetz (1) der Gruppe;
- Senden einer Nachricht, dass die Anfrage angenommen wurde, vom ersten Kernnetz (1) an das Terminal (7) über das aufgeteilte Funkzugangsnetz und weiter einer Nachricht, dass das Terminal gesucht wird, wenn das erste Kernnetz für die Registrierung des Terminals nicht geeignet ist, wobei die Annahmenaehricht eine Angabe von Netzressourcen enthält, die einem zweiten Kernnetz (2) der Gruppe eigen sind; und
- Angeben der Netzressourcen in der Antwort auf die Suchnachricht, die vom Terminal (7) ausgesendet wird, wobei das aufgeteilte Funkzugangsnetz die angegebenen Netzressaurcen untersucht, um die Antwort zum zweiten Kernnetz zu routen.

2. Verfahren nach Anspruch 1, weiterhin umfassend einen Schritt der Übertragung von Authentifizierungsparametern des Terminals vom ersten Kernnetz (1) zum zweiten Kernnetz (2), wenn das erste Kernnetz für die Registrierung des Terminals (7) nicht geeignet ist.

3. Verfahren nach Anspruch 2, wobei die Parameter zur Authentifizierung des Terminals über einen Authentifizierungsvorgatig erzielt werden, der in Antwort auf den Empfang der Anfrage zur Registrierung des Terminals durch das erste Kernnetz (1) durchgeführt wird, bevor die Nachricht, dass die Anfrage angenommen wurde, zurückgeschickt wird.

4. Verfahren nach einem der vorstehenden Ansprüche, wobei bei Erhalt der Antwort des Terminals (7) auf die Suchnachricht das zweite Kernnetz (2) Identifikations- und Authentifizierungsparameter des Terminals vom ersten Kernnetz (1) erhalt und dann dem Terminal eine vorübergehende Identität verleiht, wenn es für die Registrierung des Terminals geeignet ist.

5. Verfahren nach Anspruch 4, wobei, wenn das zweite Kernnetz (2) für die Registrierung des Terminals (7) nicht geeignet ist, es dem Terminal über das aufgeteilte Funkzugnngsnetz eine Nachricht zurücksendet, dass die Anfrage angenommen wurde, wobei diese Nachricht eine Angabe von Netzressourcen enthält, die einem dritten Kernnetz der Gruppe eigen sind.

6. Verfahren nach einem der Ansprüche 1 bis 3, wobei die Anfrage zur Registrierung des Terminals vom ersten Kernnetz (1) an das zweite Kernnetz (2) weitergeleitet wird, und wobei, wenn das zweite Kernnetz für die Registrierung des Terminals (7) geeignet ist, es dem ersten Kernnetz antwortet, indem es ihm mitteilt, dass es die Registrierung des Terminals annehmen kann, wobei die Nachricht, dass die Anfrage angenommen wurde, danach vom ersten Kernnetz an das Terminal zurückgeschickt wird mit der Angabe der Netzressourcen, die dem zweiten Kernnetz eigen sind.

7. Verfahren nach Anspruch 6, wobei die Anfrage zur Registrierung des Terminals vom ersten Kernnetz (1) an mehrere weitere Kernnetze der Gruppe gesendet wird, und wobei das erste Kernnetz die von den Kernnelzen der Gruppe erhaltenen Antworten verarbeitet, um das zweite Kernnetz (2) auszuwählen.

8. Verfahren nach Anspruch 6 bzw. 7, wobei das erste Kernnetz (1) an das zweite Kernnetz (2) Identifikations- und Authentifizierungsparameter des Terminals (7) schickt, und das zweite Kernnetz dem Terminal eine vorübergehende Identität verleiht und die Ortsbestimmung des Terminals in einem Ortsbestimmungsregister (12) auf den neuesten Stand bringt.

9. Verfahren nach einem der Ansprüche 6 bis 8, wobei, wenn die Registrierungsanfrage von einer vom Terminal (7) kommenden zusätzlichen Anfrage begleitet wird und wenn das erste Kernnetz (1) für die Registrierung des Terminals nicht geeignet ist, die an das Terminal zurückgesandte Annahmenachricht das Ablehnen der zusätzlichen Anfrage vermittelt.

10. Kwnnetzumschalter für ein Mobilfunknetz, umfassend eine Gruppe von Kernnetzen (1-3) und ein Funkzugangsnetz (4), das auf die Kernnetze der Gruppe verteilt ist, wobei der Umschalter folgendes umfasst:
- Mittel zur Herstellung einer Schnittstelle zum geteilten Funkzugangsnetz,
- Mittel zur Verarbeitung eines Versuchs einer Registrierung eines Funkterminals (7) bei einem Kernnetz (1) der Gruppe, von der der Umschalter ein Teil ist,
- Mittel zum Senden einer Nachricht, dass die Rogistrierungsanfrage, die eine Angabe der einem anderen Kernnetz der Gruppe eigenen Netzressoureen enthält, angenommen wurde, an das Terminal, wenn der Registrierungsversuch fehlgeschlagen ist, und
- Mittel, über die die Nachricht, dass die Registrierungsanfrage, die eine Angabe der einem anderen Kernnetz (2) der Gruppe eigenen Netzressotircen enthält, angenommen wurde, von einer Suchnachricht des Terminals gefolgt wird.

11. Umschalter nach Anspruch 10, weiterhin umfassend Mittel zur Weitarleitung der Authentifizierungsparameter des Terminals (7) an das andere Kernnetz (2) bei einem Fehlschlagen des Registrierungsversuchs.

12. Umschalter nach Anspruch 11, umfassend Authentifizierungsmittel des Terminals zum Erhalten der Authentifizierungsparameter des Terminals in Antwort auf den Empfang einer Registrierungsanfrage dos Terminals, bevor die Nachricht, dass die Anfrage angenommen wurde, zurückgeschickt wird.

13. Umschalter nach einem der Ansprüche 10 bis 12, umfassend Mittel zum Weiterleiten einer Anfrage zur Registrierung des Terminals (7) an das andere Kernnetz (2) und Mittel zum Empfangen einer Antwort des anderen Kernnetzes, die angibt, ob dieses für die Registrierung des Terminals geeignet ist, wobei die Antwort verarbeitet wird, um die Nachricht, dass die Registrierungsanfrage angenommen wurde, welche die Angabe der dem anderen Kernnetz eigenen Netzressourcen enthält, zu erzeugen.

14. Umschalter nach Anspruch 13, wobei die Mittel zum Weiterleiten der Registrierungsanfrage an das andere Kernnetz (2) Mittel umfassen, um diese Anfrage an mehrere Kernnetze der Gruppe zu senden, wobei der Umschalter Mittel zur Verarbeitung der von den Kernnetzen der Gruppe erhaltenen Antworten umfasst, um das andere Kernnetz auszuwählen,

15. Umschalter nach Anspruch 13 bzw. 14, umfassend Mittel zum Schicken der Identifikations- und Authentifizierungsparameter des Terminals (7) an das andere Kernnetz (2), so dass dieses andere Kernnetz die Ortsbestimmung des Terminals in einem Ortsbestimmungsregister (12) auf den neuesten Stand bringen und dem Terminal eine vorübergehende Identität verleihen kann.

16. Umschalter nach einem der Ansprüche 13 bis 15, wobei die Mittel zum Versenden der Annahmenachricht an das Terminal (7) beim Fehlschlagen des Registrierungsversuchs Mittel zum Ablehnen einer die vom Terminal ausgegebene Registrierungsanfrage begleitenden Dienstanfrage umfassen.
